# EUROPÄISCHE PATENTSCHRIFT

(11) **EP 3 176 883 B1**
(45) Veröffentlichungstag und Bekanntmachung des Hinweises auf die Patenterteilung: **22.04.2020**
(21) Anmeldenummer: 16199072.6
(22) Anmeldetag: 16.11.2016
(51) Int. Cl.: H01R 13/648, H01R 13/46, B60R 16/02

(54) **GEHÄUSE MIT INTEGRIERTER, ELEKTRISCH LEITENDER SCHICHT UND SYSTEM**
HOUSING WITH INTEGRATED ELECTRICALLY CONDUCTIVE LAYER AND SYSTEM
BOÎTIER COMPRENANT UNE COUCHE ÉLECTROCONDUCTRICE INTÉGRÉE ET SYSTÈME

(30) Priorität: 02.12.2015 DE 102015120880
(43) Veröffentlichungstag der Anmeldung: 07.06.2017
(73) Patentinhaber: Auto-Kabel Management GmbH, 79688 Hausen i.W. (DE)
(72) Erfinder: Tazarine, Wacim, 41239 Mönchengladbach (DE); Rafati, Sohejl, 41236 Mönchengladbach (DE); Lienert, Andreas, 41844 Wegberg-Arsbeck (DE)
(74) Vertreter: Cohausz & Florack

(56) Entgegenhaltungen:
- WO-A1-2016/124298
- DE-A1- 10 212 794
- DE-A1- 19 742 422
- DE-A1-102005 054 926
- DE-A1-102013 016 099
- DE-U1-202012 011 484

## Beschreibung

Die vorliegende Erfindung betrifft ein Gehäuse für eine einen Leiter und eine Abschirmung aufweisende Kraftfahrzeugenergieleitung mit einem ersten Verbindungsbereich für die Kraftfahrzeugenergieleitung und mindestens einem weiteren Verbindungsbereich für einen weiteren Leiter, wobei das Gehäuse eine elektrisch leitende Verbindung des Leiters der Kraftfahrzeugenergieleitung und des weiteren Leiters in dem Gehäuse erlaubt.

Weiterhin betrifft die Erfindung ein System umfassend ein Gehäuse, insbesondere ein erfindungsgemäßes Gehäuse, eine einen Leiter und eine Abschirmung aufweisende Kraftfahrzeugenergieleitung und mindestens einen weiteren Leiter, wobei das Gehäuse die Kraftfahrzeugenergieleitung in einem ersten Verbindungsbereich und den weiteren Leiter in einem weiteren Verbindungsbereich aufnimmt, wobei der Leiter der Kraftfahrzeugenergieleitung und der weitere Leiter in dem Gehäuse elektrisch leitend miteinander verbunden sind.

Ein als Kabeldurchführung ausgebildetes System zur Verbindung eines Leiters einer Kraftfahrzeugenergieleitung mit einem weiteren Leiter ist beispielsweise aus der deutschen Gebrauchsmusterschrift DE 20 2012 011 484 U1 bekannt. Hierbei wird ein Gehäuse vorgesehen, um den Leiter der Kraftfahrzeugenergieleitung mit dem weiteren Leiter in Form einer Hülse zu verbinden, sodass die Kraftfahrzeugenergieleitung mithilfe des Gehäuses durch ein Karosserieteil hindurchgeführt werden kann.

Im Bereich des Automobilbaus müssen insbesondere aufgrund der Elektromobilität jedoch immer größere Leistungen elektrisch übertagen werden. Dabei müssen die Elektromotoren über ausreichend ausgelegte elektrische Energieleitungen versorgt werden. Dabei werden unter Umständen Spannungen von mehreren hundert Volt benötigt, welche dementsprechend auch in den Energieleitungen auftreten.
Aufgrund der hohen Spannungen und Ströme, welche insbesondere auch Wechselspannungen und Wechselströme sein können, können hohe elektrische Felder und Magnetfelder entstehen. Hierdurch wird jedoch die elektromagnetische Verträglichkeit (EMV) eines solchen Systems verringert, da eventuell vorhandene weitere elektrische Bauteile durch die elektromagnetischen Felder beeinflusst werden können.

Aus diesem Grund werden Kraftfahrzeugenergieleitungen verwendet, welche eine Abschirmung aufweisen. Werden die Leiter dieser Kabel jedoch über ein Gehäuse, wie etwa dem der DE 20 2012 011 484 U1, mit einem weiteren elektrischen Leiter verbunden, ist im Bereich des Gehäuses keine ausreichende Abschirmung mehr vorhanden.
Um die Abschirmung der Kraftfahrzeugenergieleitung auch im Bereich des Gehäuses und/oder darüber hinaus aufrechtzuerhalten, muss die Abschirmung des Energieleiters in mühevoller Handarbeit positioniert und verarbeitet werden. Hierdurch wird jedoch eine effiziente Montage von abgeschirmten Energieleitungen erschwert, da viele Arbeitsschritte notwendig sind, um die Abschirmung der Energieleitung weiterzuführen.

Ein Gehäuse und ein System gemäß dem Oberbegriff der Ansprüche 1 und 11 ist beispielsweise aus DE 102013016099 A1 bekannt.

Vor diesem Hintergrund stellt sich der Erfindung die Aufgabe, ein gattungsgemäßes Gehäuse und ein gattungsgemäßes System anzugeben, mit dem abgeschirmte Kraftfahrzeugenergieleitungen möglichst effizient montiert werden können, aber gleichzeitig ein hohe elektromagnetische Verträglichkeit erreicht wird.

Gemäße einer ersten Lehre der Erfindung wird diese Aufgabe bei einem gattungsgemäßen Gehäuse dadurch gelöst, dass das Gehäuse aus einem Kunststoff hergestellt ist und eine in das Gehäuse integrierte, elektrisch leitende Schicht, die beidseitig mit einem Kunststoff umspritzt ist, zur Weiterführung der Abschirmung der Kraftfahrzeugenergieleitung aufweist.

Es wurde erkannt, dass dadurch, dass eine in das Gehäuse integrierte, elektrisch leitende Schicht zur Weiterführung der Abschirmung der Kraftfahrzeugenergieleitung vorgesehen wird, die elektromagnetische Verträglichkeit verbessert werden kann, insbesondere im Bereich des Gehäuses bzw. der Verbindung des Leiters des Kraftfahrzeugenergiekabels mit dem weiteren Leiter. Durch die elektrisch leitende Schicht kann insbesondere ein verbesserter Immissionsschutz erreicht werden, da die Leitungen vor elektromagnetischen Einflüssen des Umfelds geschützt werden. Zudem kann ein verbesserter Emissionsschutz erreicht werden, da auch das Umfeld vor elektromagnetischen Einflüssen durch (hochfrequente) Signale innerhalb des Gehäuses geschützt wird. Gleichzeitig werden diese Vorteile bei einer einfachen Montage erreicht, da die Abschirmung der Kraftfahrzeugenergieleitung nicht mehr durch manuelle Arbeitsschritte in Handarbeit weitergeführt werden muss, sondern vielmehr bereits durch die bloße Montage des Gehäuses durch die elektrisch leitende Schicht des Gehäuses weitergeführt wird. Die elektrisch leitende Schicht des Gehäuses kann insofern als Schirmweiterführung angesehen werden.

Durch die elektrisch leitende Schicht wird die Abschirmung der Kraftfahrzeugenergieleitung insbesondere im Bereich des Gehäuses weitergeführt. Unter einer Weiterführung der Abschirmung wird insbesondere verstanden, dass die Abschirmung der Kraftfahrzeugenergieleitung in elektrischem Kontakt mit der elektrisch leitenden Schicht des Gehäuses steht oder gebracht wird. Dadurch werden die Potentiale der Abschirmung der Kraftfahrzeugenergieleitung und der elektrisch leitenden Schicht des Gehäuses ausgeglichen. Hierzu kann beispielsweise ein Übergabebereich vorgesehen sein, in dem die Abschirmung der Kraftfahrzeugenergieleitung die elektrisch leitende Schicht im Verbindungsbereich im Inneren des Gehäuses kontaktiert. Dabei kann ein geringer Übergangswiderstand zwischen der Abschirmung und der elektrisch leitenden Schicht des Gehäuses erreicht werden.

Vorteilhaft kann in jedem Verbindungsbereichen ein Übergabebereich zur Kontaktierung der elektrisch leitenden Schicht des Gehäuses mit einer entsprechenden Abschirmung vorgesehen sein.

Eine Kraftfahrzeugenergieleitung kann bevorzugt ein Kabel sein. Es ist jedoch auch möglich, dass eine Kraftfahrzeugenergieleitung in Form einer Schiene vorgesehen ist. Der Leiter der Kraftfahrzeugenergieleitung kann beispielsweise in Form von einem oder mehreren Drähten oder Litzen vorgesehen sein. Der Leiter kann beispielsweise aus Kupfer oder einer Kupferlegierung oder aus Aluminium oder einer Aluminiumlegierung hergestellt sein. Die Abschirmung kann beispielsweise elektrisch isoliert vom Leiter diesen umgeben.

Der weitere Leiter kann beispielsweise ebenfalls durch eine Kraftfahrzeugenergieleitung bereitgestellt werden, welche ebenfalls eine Abschirmung aufweist. Dieser kann wie zuvor beschrieben mit dem Gehäuse verbunden sein. Insofern wird auf die Ausführungen zur Kraftfahrzeugenergieleitung und dem ersten Verbindungsbereich verwiesen.

Der weitere Leiter kann jedoch beispielsweise auch durch ein elektrisch leitendes Kontaktelement, etwa in Form eines Anschlusselement, einer elektrisch leitenden Hülse, einer elektrisch leitenden Schraube oder dergleichen bereitgestellt werden.

Die elektrisch leitende Verbindung des Leiters der Kraftfahrzeugenergieleitung und des weiteren Leiters in dem Gehäuse kann beispielsweise direkt oder indirekt (etwa über ein weiteres Kontaktelement) erfolgen.

Die vorgesehenen Kraftfahrzeugenergieleitungen können insbesondere Hochvoltleitungen sein. Unter einer Hochvoltleitung wird im Automobilbereich insbesondere eine Leitung verstanden, welche für eine deutlich höhere Spannung als die üblichen 12 V / 24 V ausgelegt ist, beispielsweise für bis zu 400 V, bis zu 600 V oder sogar bis zu 1.000 V. Hierfür können Leitungs- oder Leiterquerschnitte von bis zu 35 mm² oder sogar bis zu 60 mm² notwendig sein.

Zudem kann das Gehäuse auch zur Verbindung der Kraftfahrzeugenergieleitung mit mehr als einem weiteren Leiter (beispielsweise zur Verbindung mit zwei oder drei weiteren Leitern) eingerichtet sein. Wie bereits ausgeführt, können die weiteren Leiter insbesondere durch entsprechende weitere (abgeschirmte) Kraftfahrzeugenergieleitungen bereitgestellt werden. Hierzu kann das Gehäuse dann entsprechend mehr als einen weiteren Verbindungsgebereich (beispielsweise zwei oder drei weitere Verbindungsbereiche) zur Verbindung der weiteren Leiter aufweisen. Werden die weiteren vorgesehenen Leiter jeweils ebenfalls durch abgeschirmte Kraftfahrzeugenergieleitungen bereitgestellt, kann die jeweilige Abschirmung der jeweiligen Kraftfahrzeugenergieleitung in dem entsprechenden Verbindungsbereich des Gehäuses vorteilhaft ebenfalls die elektrisch leitende Schicht des Gehäuses in einem Übergabebereich kontaktieren.

Durch die Verbindungsbereiche kann eine Leitung bzw. ein Leiter insbesondere fest mit dem Gehäuse verbunden werden. Insbesondere kann das Gehäuse derart ausgebildet sein, dass eine Leitung, ein Leiter oder einen Teil hiervon zumindest abschnittsweise in dem Verbindungsbereich aufgenommen werden kann. Insbesondere weist das Gehäuse für jeden Verbindungsbereich eine entsprechende Öffnung auf, durch die die entsprechende Leitung, der Leiter, oder ein Teil hiervon in das Gehäuse geführt werden kann.

Gemäß einer vorteilhaften Ausgestaltung des erfindungsgemäßen Gehäuses ist die elektrisch leitende Schicht von den Leitern isoliert. Hierdurch kann eine effektive Abschirmung im Bereich des Gehäuses und eine hohe Durchschlagfestigkeit zwischen der elektrisch leitenden Schicht und den Leitern erreicht werden. Abgesehen von der elektrisch leitenden Schicht ist das Gehäuse beispielsweise isolierend, beispielsweise aus einem isolierenden Material hergestellt.

Gemäß einer weiteren vorteilhaften Ausgestaltung des erfindungsgemäßen Gehäuses weist das Gehäuse ein erstes Teilstück und ein zweites Teilstück auf. Grundsätzlich kann das Gehäuse auch noch weitere Teilstücke aufweisen, bevorzugt ist das Gehäuse jedoch aus dem ersten und dem zweiten Teilstück gebildet. Beispielsweise sind die Teilstücke in Form von Gehäusehälften vorgesehen, welche zusammen ein zweiteiliges Gehäuse bilden. Die elektrisch leitende Schicht kann zwar grundsätzlich nur in einem der Teilstücke vorgesehen sein, bevorzugt weist jedoch jedes der Teilstücke eine elektrisch leitende Teilschicht zur Bildung der elektrisch leitenden Schicht des Gehäuses auf.

Gemäß einer weiteren vorteilhaften Ausgestaltung des erfindungsgemäßen Gehäuses weisen das erste Teilstück und das zweite Teilstück jeweils eine elektrisch leitende Teilschicht auf, welche elektrisch leitend miteinander verbunden sind. Hierdurch kann ein Potentialausgleich zwischen den elektrisch leitenden Teilschichten der Teilstücke stattfinden. Beispielsweise erfolgt die elektrisch leitende Verbindung durch eine zumindest abschnittsweise Überlappung oder Verzahnung der jeweiligen elektrisch leitenden Teilschichten.

Gemäß einer weiteren vorteilhaften Ausgestaltung des erfindungsgemäßen Gehäuses ist das Gehäuse zur Aufnahme der Kraftfahrzeugenergieleitung zwischen den Teilstücken ausgebildet. Hierdurch kann die Montage weiterhin vereinfacht werden und effizient ausgestaltet werden, da die entsprechende Kraftfahrzeugenergieleitung lediglich zwischen den Teilstücken positionierten zu werden braucht und die beiden Teilstücke zu dem Gehäuse verbunden werden müssen. Dies kann vorteilhaft auch für weitere vorgesehene Kraftfahrzeugenergieleitungen gelten.

Um die Effizienz bei der Montage weiter zu vereinfachen, sind gemäß einer weiteren vorteilhaften Ausgestaltung des erfindungsgemäßen Gehäuses die Teilstücke des Gehäuses mechanisch miteinander verbunden oder verbindbar. Die finale Konfektion kann dadurch zeiteffizient durchgeführt werden. Besonders vorteilhaft ist dabei eine rein mechanische Verbindung. Unter einer mechanischen Verbindung ist insbesondere eine kraftschlüssige und/oder formschlüssige Verbindung zu verstehen, beispielsweise durch Einrasten, Verschrauben oder Klemmen. Hierdurch können ein Verschweißen oder andere aufwendige Verbindungen der Teilstücke des Gehäuses vermieden werden.

Gemäß einer weiteren vorteilhaften Ausgestaltung des erfindungsgemäßen Gehäuses weist das Gehäuse eine Abdichtung zur dichten Verbindung der Teilstücke miteinander auf. Hierdurch kann sichergestellt werden, dass das Gehäuse trotz der Ausbildung als Teilstücke im verbauten oder montierten Zustand im Übergangsbereich von einem zum anderen Teilstück (Gehäusenaht) gegenüber der Umgebung abgedichtet ist. Beispielsweise kann ein zumindest abschnittsweise umlaufendes Dichtelement entlang der Gehäusenaht vorgesehen werden.

Erfindungsgemäß ist das Gehäuse aus einem Kunststoff hergestellt, wobei die elektrisch leitende Schicht mit einem Kunststoff beidseitig umspritzt ist. Es wurde erkannt, dass hierdurch eine besonders wirtschaftliche Herstellung eines isolierenden Gehäuses mit integrierter, elektrisch leitender Schicht herstellbar ist. Zudem kann auf diese Weise prozesssicher die erwünschte Isolation und Durchschlagsfestigkeit zwischen der elektrisch leitenden Schicht und der jeweiligen Leiter einerseits und der elektrisch leitenden Schicht und der Umgebung andererseits erreicht werden.

Gemäß einer weiteren vorteilhaften Ausgestaltung des erfindungsgemäßen Gehäuses ist das Gehäuse zur Bildung eines Übergabestützpunktes, eines Mittenabgriffs, einer Verzweigung und/oder einer Kabeldurchführung eingerichtet. Durch die integrierte, elektrisch leitende Schicht kann jeweils die Montage eines Übergabestützpunktes, eines Mittenabgriffs, einer Verzweigung und/oder einer Kabeldurchführung einfach durchgeführt werden und trotzdem eine hohe elektromagnetische Verträglichkeit erreicht werden. Ein Übergabestützpunkt kann beispielsweise notwendig sein, um die Kraftfahrzeugenergieleitung an eine weitere Kraftfahrzeugenergieleitung anzuschließen. Ebenfalls kann die Kraftfahrzeugenergieleitung an einen Verbraucher (beispielsweise ein Motor) oder Erzeuger (beispielsweise ein Generator) angeschlossen werden. Der weitere elektrische Leiter stellt dann beispielsweise die Verbindung zu dem Verbraucher oder Erzeuger her. Bei einem Mittenabgriff kann die Kraftfahrzeugenergieleitung beispielsweise durch das Gehäuse durchgeführt werden und der weitere Leiter an den Leiter der Kraftfahrzeugenergieleitung angebunden werden. Bei einer Verzweigung kann die Kraftfahrzeugenergieleitung mit zwei oder mehr weiteren Kraftfahrzeugenergieleitungen verbunden werden. Bei einer Kabeldurchführung kann die Leitung gleichzeitig durch einen Teil der Fahrzeugkarosserie durchgeführt werden.
Gemäß einer weiteren vorteilhaften Ausgestaltung des erfindungsgemäßen Gehäuses umfasst die elektrisch leitende Schicht mindestens ein Blech oder eine Folie. Bevorzugt besteht die elektrisch leitende Schicht aus einem Blech oder einer Folie. Das Gehäuse kann auf diese Weise einfach mit einer elektrisch leitenden Schicht versehen werden. Insbesondere kann das Blech oder die Folie mit einem Kunststoff umspritzt werden. Beispielsweise umfasst jedes Teilstück des Gehäuses einen Teil der leitenden Schicht in Form eines Teilbleches oder einer Teilfolie.
Gemäß einer weiteren vorteilhaften Ausgestaltung des erfindungsgemäßen Gehäuses ist das Gehäuse zur Erdung der elektrisch leitenden Schicht eingerichtet. Hierdurch kann die elektromagnetische Verträglichkeit weiter verbessert werden, da die Abschirmung des Kraftfahrzeugenergiekabels durch das Gehäuse geerdet werden kann. Letztendlich kann über die Abschirmung des Kraftfahrzeugenergiekabels auch ein Potentialausgleich zwischen mehreren geerdeten Gehäusen erfolgen.
Gemäß einer zweiten Lehre der Erfindung wird die eingangs genannte Aufgabe bei einem gattungsgemäßen System dadurch gelöst, dass das Gehäuse aus einem Kunststoff hergestellt ist und die Abschirmung der Kraftfahrzeugenergieleitung mittels einer in das Gehäuse integrierten, elektrisch leitenden Schicht, die beidseitig mit einem Kunststoff umspritzt ist, weitergeführt ist.

Wie bereits ausgeführt, wurde erkannt, dass durch eine in das Gehäuse integrierte, elektrisch leitende Schicht zur Weiterführung der Abschirmung der Kraftfahrzeugenergieleitung die elektromagnetische Verträglichkeit verbessert werden kann. Gleichzeitig wird eine einfache Montage erreicht, da bereits durch die bloße Montage des Gehäuses die Abschirmung mittels der elektrisch leitenden Schicht des Gehäuses weitergeführt werden kann.

Gemäß einer vorteilhaften Ausgestaltung des erfindungsgemäßen Systems ist die Kraftfahrzeugenergieleitung eine Hochvoltleitung, insbesondere ein Hochvoltkabel. Auch der weitere Leiter kann durch eine Hochvoltleitung, insbesondere ebenfalls ein Hochvoltkabel bereitgestellt werden. Insbesondere bei Hochvoltleitungen und -kabeln verbessert das beschriebene Gehäuse die elektromagnetische Verträglichkeit.

Gemäß einer weiteren vorteilhaften Ausgestaltung des erfindungsgemäßen Systems wird der weitere Leiter durch eine weitere Kraftfahrzeugenergieleitung mit einer Abschirmung bereitgestellt. In diesem Fall kann die Abschirmung von der Kraftfahrzeugenergieleitung über die elektrisch leitende Schicht mit der Abschirmung der weiteren Kraftfahrzeugenergieleitung verbunden werden.

Gemäß einer weiteren vorteilhaften Ausgestaltung des erfindungsgemäßen Systems ist die Abschirmung der Kraftfahrzeugenergieleitung auf der Kraftfahrzeugenergieleitung fixiert, insbesondere mittels Crimpen und/oder einer Presshülse. Auf diese Weise wird an der Kraftfahrzeugenergieleitung ein Kontaktbereich bereitgestellt, mit dem die Abschirmung der Kraftfahrzeugenergieleitung in einem Übergabebereich mit der elektrisch leitenden Schicht verbunden werden kann. Werden weitere Leiter ebenfalls durch Kraftfahrzeugenergieleitungen bereitgestellt, kann dies auch für die vorgesehenen weiteren Kraftfahrzeugenergieleitungen gelten.

Gemäß einer weiteren vorteilhaften Ausgestaltung des erfindungsgemäßen Systems weist das System weiterhin jeweils eine Abdichtung, insbesondere eine Einzeladerabdichtung, zur Abdichtung des Gehäuses gegenüber der Umgebung im Bereich des jeweiligen Verbindungsbereichs auf. Hierdurch kann die Stelle des Gehäuses abgedichtet werden, an der die jeweilige Leitung mit dem Gehäuse verbunden ist. Bevorzugt sind die Abdichtungen in Form von Einzeladerabdichtungen vorgesehen, welche beispielsweise in Form von Hülsen auf die jeweilige Kraftfahrzeugenergieleitung geschoben werden können. Dadurch ist weiterhin eine (rein) mechanische Verbindung der Teilstücke des Gehäuses möglich, was eine schnelle finale Montage ermöglicht.

In Bezug auf weitere vorteilhafte Ausgestaltungen des Systems wird auf die Ausgestaltungen des Gehäuses verwiesen.

Im Folgenden soll die Erfindung anhand von Ausführungsbeispielen in Verbindung mit der Zeichnung näher erläutert werden. Die Zeichnung zeigt in
- Fig. 1: beispielhaft eine perspektivische Darstellung von drei präparierten Kraftfahrzeugenergieleitungen, bevor diese in einem Gehäuse untergebracht werden;
- Fig. 2: eine Schnittdarstellung eines Ausführungsbeispiels eines erfindungsgemäßen Systems mit einem Ausführungsbeispiel eines erfindungsgemäßen Gehäuses;
- Fig. 3: eine Schnittdarstellung eines zweiten Ausführungsbeispiels eines erfindungsgemäßen Systems mit einem zweiten Ausführungsbeispiel eines erfindungsgemäßen Gehäuses.

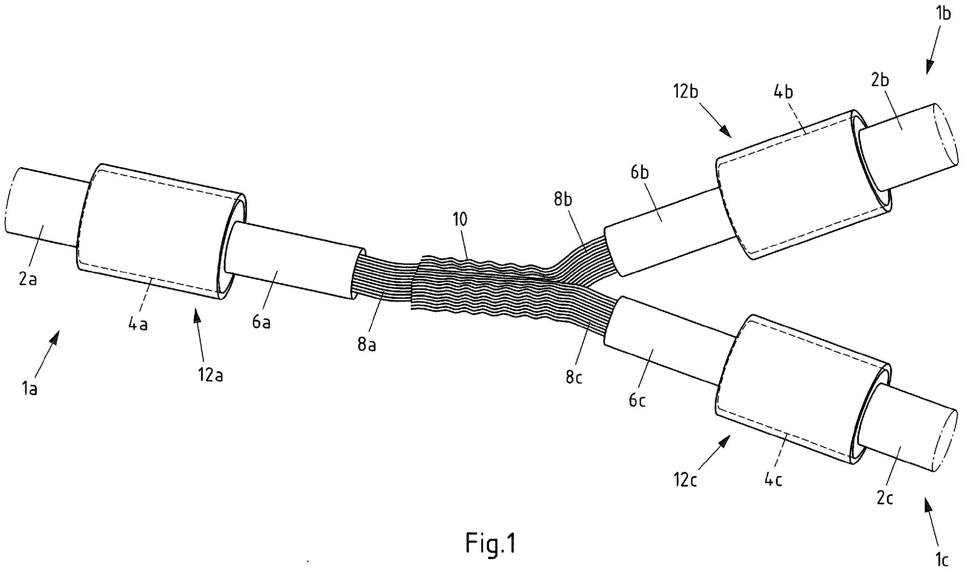

Fig. 1 zeigt zunächst beispielhaft eine perspektivische Darstellung von drei präparierten Kraftfahrzeugenergieleitungen 1a, 1b, 1c, bevor diese in einem Gehäuse untergebracht werden. Die Kraftfahrzeugenergieleitungen 1a, 1b, 1c sind als jeweils als Hochvoltkabel ausgebildet. Die Kraftfahrzeugenergieleitungen 1a, 1b, 1c weisen jeweils eine äußere Isolierschicht 2a, 2b, 2c, eine Abschirmung 4a, 4b, 4c, eine innere Isolierschicht 6a, 6b, 6c und einen Leiter 8a, 8b, 8c auf. Die Leiter 8a, 8b, 8c bestehen jeweils aus einer Litze mit Einzeldrähten und können für mehrere hundert Volt ausgelegt sein. Die Leiter 8a, 8b, 8c sind im Bereich 10 miteinander gefügt, beispielsweise mittels Crimpen. Die Abschirmungen 4a, 4b, 4c sind jeweils mittels einer Presshülse 12a, 12b, 12c auf die Hochvoltkabel gecrimpt, wodurch diese einen Kontaktbereich bilden.

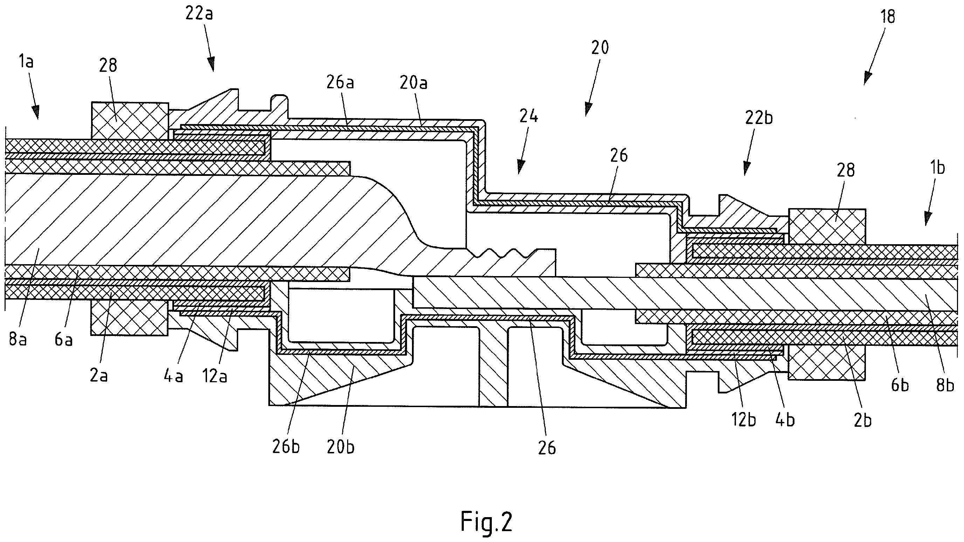

Fig. 2 zeigt nun eine Schnittdarstellung eines Ausführungsbeispiels eines erfindungsgemäßen Systems 18 mit einem Ausführungsbeispiel eines erfindungsgemäßen Gehäuses 20, welches beispielsweise zwei oder auch alle drei der präparierten Kraftfahrzeugenergieleitungen aus Fig. 1 aufnehmen kann.

Das Gehäuse umfasst einen ersten Verbindungsbereich 22a für die Kraftfahrzeugenergieleitung 1a und einem weiteren Verbindungsbereich 22b für einen weiteren Leiter, welcher in diesem Fall der Leiter 8b der Kraftfahrzeugenergieleitung 1b ist. Das Gehäuse erlaubt eine elektrisch leitende Verbindung des Leiters 8a der Kraftfahrzeugenergieleitung 1a und des weiteren Leiters 8b der Kraftfahrzeugenergieleitung 1b in dem Gehäuse im Bereich 24.

Das Gehäuse 20 umfasst ein erstes Teilstück 20a und ein zweites Teilstück 20b. Das Gehäuse 20 weist eine in das Gehäuse 20 integrierte, elektrisch leitende Schicht 26 auf, welche aus elektrisch leitend verbundenen Teilschichten 26a, 26b besteht, zur Weiterführung der Abschirmung 4a der Kraftfahrzeugenergieleitung 1a. Hierfür kontaktiert die Abschirmung 4a der Kraftfahrzeugenergieleitung 1a im Bereich der Presshülse 12a die elektrisch leitende Schicht 26 des Gehäuses 20 in einem Übergabebereich im Inneren des Gehäuses 20. Da der weitere Leiter 8b ebenfalls durch eine abgeschirmte Kraftfahrzeugenergieleitung 1b bereitgestellt wird, kann hier ebenfalls die Abschirmung 4b weitergeführt werden, indem die Abschirmung 4b der Kraftfahrzeugenergieleitung 1b im Bereich der Presshülse 12b die elektrisch leitende Schicht 26 des Gehäuses 20 in einem Übergabebereich im Inneren des Gehäuses 20 kontaktiert.

Das Gehäuse 20 ist dabei zur Aufnahme der Kraftfahrzeugenergieleitungen 1a, 1b zwischen den Teilstücken 20a, 20b ausgebildet. Die elektrisch leitende Schicht 26 ist dabei von den Leitern 8a, 8b isoliert. Dies wird dadurch erreicht, dass das Gehäuse 20 aus einem Kunststoff hergestellt ist, wobei die elektrisch leitende Schicht 26 beidseitig mit einem Kunststoff umspritzt ist. Die elektrisch leitende Schicht 26 kann dabei beispielsweise als Folie oder Blech ausgebildet sein.

Die Teilstücke 26a, 26b des Gehäuses 20 sind rein mechanisch miteinander verbunden, was eine besonders einfache und effiziente Montage ermöglicht. Zur dichten Verbindung der Teilstücke 20a, 20b miteinander kann das Gehäuse 20 zudem eine Abdichtung aufweisen, welche etwa entlang der Naht der beiden Teilstücke 20a, 20b verläuft.

Weiterhin ist in dem in Fig. 2 dargestellten System 18 für jede Kraftfahrzeugenergieleitung 1a, 1b jeweils eine Abdichtung 28 in Form einer Einzeladerabdichtung zur Abdichtung des Gehäuses 20 gegenüber der Umgebung im Bereich des jeweiligen Verbindungsbereichs 22a, 22b vorgesehen.

Das Gehäuse 20 kann beispielsweise zur Bildung eines Übergabestützpunktes von der Kraftfahrzeugenergieleitung 1a auf die Kraftfahrzeugenergieleitung 1b dienen. Ist ebenfalls die Kraftfahrzeugenergieleitung 1c, wie in Fig. 1 dargestellt, vorgesehen, kann das Gehäuse 20 auch zur Bildung einer Verzweigung dienen, indem ein entsprechender weiterer (insgesamt dritter) Verbindungsbereich für die Kraftfahrzeugenergieleitung 1c vorgesehen wird.

Im Ergebnis kann mit dem Gehäuse 20 vorteilhaft eine elektromagnetisch verträgliche Verzweigung und/oder eine Kabeldurchführung gebildet werden, da die Abschirmungen 4a, 4b der Kraftfahrzeugenergieleitungen 1a, 1b mittels der elektrisch leitenden Schicht 26 weitergeführt werden können, während gleichzeitig eine einfache mechanische Montage des Gehäuses 20 möglich ist.

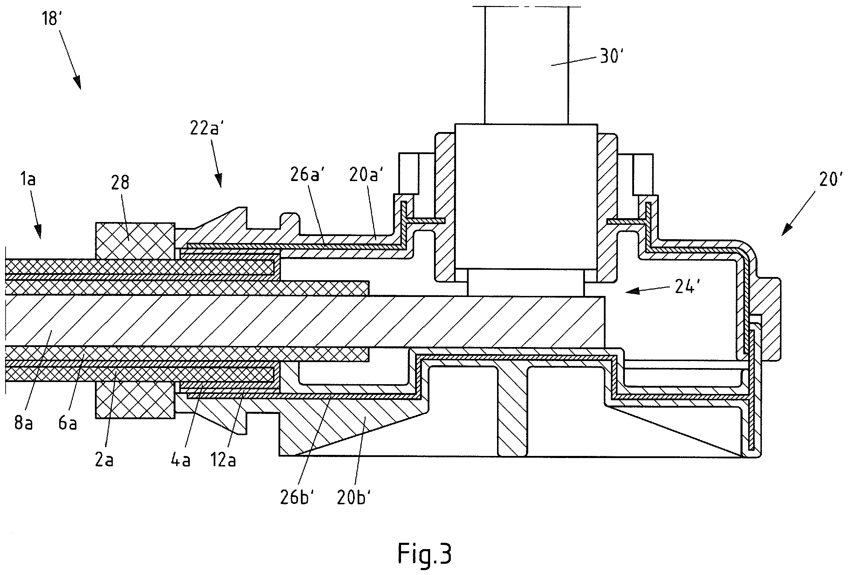

Fig. 3 zeigt nun eine Schnittdarstellung eines zweiten Ausführungsbeispiels eines erfindungsgemäßen Systems 18' mit einem zweiten Ausführungsbeispiel eines erfindungsgemäßen Gehäuses 20'.

Hierbei wird zunächst auf die Beschreibung des Systems 18 mit dem Gehäuse 20 verwiesen. Im Folgenden sollen insbesondere die Unterschiede hierzu dargestellt werden.

Während die Kraftfahrzeugenergieleitung 1a ähnlich wie in Fig. 2 dargestellt mit dem Gehäuse 20' verbunden ist, ist in diesem Fall keine weitere abgeschirmte Kraftfahrzeugenergieleitung vorgesehen. Vielmehr ist in dem weiteren Verbindungsbereich 22b' ein weiterer Leiter in Form eines elektrisch leitenden Kontaktelements 30' vorgesehen. Zudem ist der Leiter 30' auch nicht zwischen den Teilstücken 20a', 20b' des Gehäuses 20' angeordnet, sondern in dem ersten Teilstück 20a' dicht eingefasst. Das Kontaktelement 30' ist beispielsweise lösbar oder unlösbar mit dem Gehäuse 20' verbunden. Das Kontaktelement 30' ist mit dem Leiter 8a der Kraftfahrzeugenergieleitung 1a in dem Gehäuse 20' im Bereich 24' elektrisch leitend verbunden. An das Kontaktelement 30' kann beispielsweise wiederum eine Kraftfahrzeugenergieleitung (nicht dargestellt) angeschlossen werden. In dem weiteren Verbindungsgebereich 22b' ist zudem die elektrisch leitende Schicht 26' bevorzugt so vorgesehen, dass diese von außen kontaktiert werden kann.

Im Ergebnis kann mit dem System 18' bzw. dem Gehäuse 20' vorteilhaft ein elektromagnetisch verträglicher Übergabestützpunkt gebildet werden, da die Abschirmung 4a der Kraftfahrzeugenergieleitung 1a mittels der elektrisch leitenden Schicht 26' weitergeführt werden kann, während gleichzeitig eine einfache mechanische Montage des Gehäuses 20' möglich ist.

## Patentansprüche

1. Gehäuse für eine einen Leiter (8a) und eine Abschirmung (4a) aufweisende Kraftfahrzeugenergieleitung (1a), wobei das Gehäuse umfasst
- einen ersten Verbindungsbereich (22a, 22a') für die Kraftfahrzeugenergieleitung (1a) und
- mindestens einen weiteren Verbindungsbereich (22b, 22b') für einen weiteren Leiter (8b, 30'),
wobei das Gehäuse eine elektrisch leitende Verbindung des Leiters (8a) der Kraftfahrzeugenergieleitung (1a) und des weiteren Leiters (8b, 30') miteinander in dem Gehäuse (20, 20') erlaubt,
**dadurch gekennzeichnet, dass**
das Gehäuse (20, 20') aus einem Kunststoff hergestellt ist und eine in das Gehäuse (20, 20') integrierte, elektrisch leitende Schicht (26, 26'), die beidseitig mit einem Kunststoff umspritzt ist, zur Weiterführung der Abschirmung (4a) der Kraftfahrzeugenergieleitung (1a) aufweist.

2. Gehäuse nach Anspruch 1,
**dadurch gekennzeichnet, dass** die elektrisch leitende Schicht (26, 26') von den Leitern (8a, 8b, 30') isoliert ist.

3. Gehäuse nach Anspruch 1 oder 2,
**dadurch gekennzeichnet, dass** das Gehäuse (20, 20') ein erstes Teilstück (20a, 20a') und ein zweites Teilstück (20b, 20b') aufweist.

4. Gehäuse nach Anspruch 3,
**dadurch gekennzeichnet, dass** das erste Teilstück (20a, 20a') und das zweite Teilstück (20b, 20b') jeweils eine elektrisch leitende Teilschicht (26a, 26a'; 26b, 26b') aufweisen, welche elektrisch leitend miteinander verbunden sind.

5. Gehäuse nach Anspruch 3 oder 4,
**dadurch gekennzeichnet, dass** das Gehäuse (20, 20') zur Aufnahme der Kraftfahrzeugenergieleitung (1a) zwischen den Teilstücken (20a, 20b; 20a', 20b') ausgebildet ist.

6. Gehäuse nach einem der Ansprüche 3 bis 5,
**dadurch gekennzeichnet, dass** die Teilstücke (20a, 20b; 20a', 20b') des Gehäuses (20, 20') mechanisch miteinander verbunden oder verbindbar sind.

7. Gehäuse nach einem der Anspruch 3 bis 6,
**dadurch gekennzeichnet, dass** das Gehäuse (20, 20') eine Abdichtung zur dichten Verbindung der Teilstücke (20a, 20b; 20a', 20b') miteinander aufweist.

8. Gehäuse nach einem der Ansprüche 1 bis 7,
**dadurch gekennzeichnet, dass** das Gehäuse (20, 20') zur Bildung eines Übergabestützpuntkes, eines Mittenabgriffs, einer Verzweigung und/oder einer Kabeldurchführung eingerichtet ist.

9. Gehäuse nach einem der Ansprüche 1 bis 8,
**dadurch gekennzeichnet, dass** die elektrisch leitende Schicht (26, 26') mindestens ein Blech oder eine Folie umfasst.

10. Gehäuse nach einem der Ansprüche 1 bis 9,
**dadurch gekennzeichnet, dass** das Gehäuse (20, 20') zur Erdung der elektrisch leitenden Schicht (26, 26') eingerichtet ist.

11. System umfassend
- ein Gehäuse (20, 20'), insbesondere ein Gehäuse nach einem der Ansprüche 1 bis 10,
- eine einen Leiter (8a) und eine Abschirmung (4a) aufweisende Kraftfahrzeugenergieleitung (1a) und
- mindestens einen weiteren Leiter (8b, 30'),
wobei das Gehäuse (20, 20') die Kraftfahrzeugenergieleitung (1a) in einem ersten Verbindungsbereich (22a, 22a') und den weiteren Leiter (8b, 30') in einem weiteren Verbindungsbereich (22b, 22b') aufnimmt,
wobei der Leiter (8a) der Kraftfahrzeugenergieleitung (1a) und der weitere Leiter (8b, 30') in dem Gehäuse (20, 20') elektrisch leitend miteinander verbunden sind,
**dadurch gekennzeichnet, dass**
das Gehäuse (20, 20') aus einem Kunststoff hergestellt ist und die Abschirmung (4a) der Kraftfahrzeugenergieleitung (1a) mittels einer in das Gehäuse (20, 20') integrierten, elektrisch leitenden Schicht (26, 26'),die beidseitig mit einem Kunststoff umspritzt ist, weitergeführt ist.

12. System nach Anspruch 11,
**dadurch gekennzeichnet, dass** die Kraftfahrzeugenergieleitung (1a) eine Hochvoltleitung, insbesondere ein Hochvoltkabel ist.

13. System nach Anspruch 11 oder 12,
**dadurch gekennzeichnet, dass** der weitere Leiter (8b) durch eine weitere Kraftfahrzeugenergieleitung (1b) mit einer Abschirmung (4b) bereitgestellt wird.

14. System nach einem der Ansprüche 11 bis 13,
**dadurch gekennzeichnet, dass** die Abschirmung (4a) der Kraftfahrzeugenergieleitung (1a) auf der Kraftfahrzeugenergieleitung (1a) fixiert ist, insbesondere mittels Crimpen und/oder einer Presshülse.

15. System nach einem der Ansprüche 11 bis 14,
**dadurch gekennzeichnet, dass** das System (18, 18') weiterhin jeweils eine Abdichtung (28), insbesondere eine Einzeladerabdichtung, zur Abdichtung des Gehäuses (20, 20') gegenüber der Umgebung im Bereich des jeweiligen Verbindungsbereichs (22a, 22b; 22a', 22b') aufweist.

## Claims

1. Housing for a motor vehicle power line (1a) comprising a conductor (8a) and a shield (4a), the housing comprising
- a first connection region (22a, 22a') for the motor vehicle power line (1a), and
- at least one further connection region (22b, 22b') for a further conductor (8b, 30'),
wherein the housing enables an electrically conductive connection of the conductor (8a) of the motor vehicle power line (1a) and of the further conductor (8b, 30') to one another in the housing (20, 20'),
**characterised in that**
the housing (20, 20') is made of a plastic and comprises an electrically conductive layer (26, 26') integrated into the housing (20, 20') and encapsulated on both sides with a plastic for continuation of the shield (4a) of the motor vehicle power line (1a).

2. Housing according to claim 1,
**characterised in that** the electrically conductive layer (26, 26') is insulated from the conductors (8a, 8b, 30').

3. Housing according to claim 1 or 2,
**characterised in that** the housing (20, 20') comprises a first section (20a, 20a') and a second section (20b, 20b').

4. Housing according to claim 3,
**characterized in that** the first section (20a, 20a') and the second section (20b, 20b') each have an electrically conductive sub-layer (26a, 26a'; 26b, 26b') which are electrically conductively connected to one another.

5. Housing according to claim 3 or 4,
**characterized in that** the housing (20, 20') is arranged to accommodate the motor vehicle power line (1a) between the sections (20a, 20b; 20a', 20b').

6. Housing according to one of claims 3 to 5,
**characterised in that** the sections (20a, 20b; 20a', 20b') of the housing (20, 20') are mechanically connected or connectable to one another.

7. Housing according to any of claims 3 to 6,
**characterised in that** the housing (20, 20') has a seal for the sealed connection of the sections (20a, 20b; 20a', 20b') to one another.

8. Housing according to any of claims 1 to 7,
**characterised in that** the housing (20, 20') is arranged to form a transfer support point, a centre tap, a branch and/or a cable bushing.

9. Housing according to any of claims 1 to 8,
**characterised in that** the electrically conductive layer (26, 26') comprises at least one sheet or foil.

10. Housing according to one of claims 1 to 9,
**characterised in that** the housing (20, 20') is arranged to ground the electrically conductive layer (26, 26').

11. System comprising
- a housing (20, 20'), in particular a housing according to one of claims 1 to 10,
- a motor vehicle power line (1a) comprising a conductor (8a) and a shield (4a), and
- at least one further conductor (8b, 30'),
wherein the housing (20, 20') accommodates the motor vehicle power line (1a) in a first connection region (22a, 22a') and the further conductor (8b, 30') in a further connection region (22b, 22b'),
wherein the conductor (8a) of the motor vehicle power line (1a) and the further conductor (8b, 30') in the housing (20, 20') are electrically conductively connected to one another,
**characterised in that**
the housing (20, 20') is made of a plastic material and the shield (4a) of the motor vehicle power line (1a) is continued by means of an electrically conductive layer (26, 26') integrated into the housing (20, 20') and encapsulated on both sides with a plastic material.

12. System according to claim 11,
**characterised in that** the motor vehicle power line (1a) is a high-voltage line, in particular a high-voltage cable.

13. System according to claim 11 or 12,
**characterised in that** the further conductor (8b) is provided by a further motor vehicle power line (1b) with a shield (4b).

14. System according to one of claims 11 to 13,
**characterized in that** the shield (4a) of the motor vehicle power line (1a) is fixed on the motor vehicle power line (1a), in particular by means of crimping and/or a press sleeve.

15. System according to one of claims 11 to 14,
**characterized in that** the system (18, 18') further comprises a respective seal (28), in particular a single-wire seal, for sealing the housing (20, 20') with respect to the environment in the area of the respective connection region (22a, 22b; 22a', 22b').

## Revendications

1. Boîtier pour une ligne d'alimentation en énergie (1a) d'un véhicule automobile, ladite ligne d'alimentation en énergie présentant un conducteur (8a) et un blindage (4a), où le boîtier comprend :
- une première zone de liaison (22a, 22a') pour la ligne d'alimentation en énergie (1a) du véhicule automobile et
- au moins une autre zone de liaison (22b, 22b') pour un autre conducteur (8b, 30'),
où le boîtier permet une liaison électroconductrice du conducteur (8a) de la ligne d'alimentation en énergie (1a) du véhicule automobile et de l'autre conducteur (8b, 30'), ladite liaison dudit conducteur avec l'autre conducteur étant réalisée dans le boîtier (20, 20'),
**caractérisé**
**en ce que** le boîtier (20, 20') est fabriqué en étant composé d'une matière plastique et présente une couche électroconductrice (26, 26') intégrée dans le boîtier (20, 20'), ladite couche électroconductrice, qui est enrobée, sur ses deux côtés, d'une matière plastique moulée par injection, sert à prolonger le blindage (4a) de la ligne d'alimentation en énergie (1a) du véhicule automobile.

2. Boîtier selon la revendication 1,
**caractérisé en ce que** la couche électroconductrice (26, 26') est isolée des conducteurs (8a, 8b, 30').

3. Boîtier selon la revendication 1 ou 2,
**caractérisé en ce que** le boîtier (20, 20') présente une première pièce partielle (20a, 20a') et une deuxième pièce partielle (20b, 20b').

4. Boîtier selon la revendication 3,
**caractérisé en ce que** la première pièce partielle (20a, 20a') et la deuxième pièce partielle (20b, 20b') présentent respectivement une couche partielle électroconductrice (26a, 26a' ; 26b, 26b'), lesdites pièces partielles étant reliées les unes aux autres de manière électroconductrice.

5. Boîtier selon la revendication 3 ou 4,
**caractérisé en ce que** le boîtier (20, 20') est configuré pour servir au logement de la ligne d'alimentation en énergie (1a) du véhicule automobile entre les pièces partielles (20a, 20b ; 20a', 20b').

6. Boîtier selon l'une quelconque des revendications 3 à 5,
**caractérisé en ce que** les pièces partielles (20a, 20b ; 20a', 20b') du boîtier (20, 20') sont reliées ou peuvent être reliées les unes aux autres mécaniquement.

7. Boîtier selon l'une quelconque des revendications 3 à 6,
**caractérisé en ce que** le boîtier (20, 20') présente un joint d'étanchéité permettant la liaison étanche des pièces partielles (20a, 20b ; 20a', 20b') les unes avec les autres.

8. Boîtier selon l'une quelconque des revendications 1 à 7,
**caractérisé en ce que** le boîtier (20, 20') est conçu pour permettre la formation d'un point de transfert, d'une prise médiane, d'une ramification et/ou d'un passe-câble.

9. Boîtier selon l'une quelconque des revendications 1 à 8,
**caractérisé en ce que** la couche électroconductrice (26, 26') se compose au moins d'une tôle ou d'une feuille.

10. Boîtier selon l'une quelconque des revendications 1 à 9,
**caractérisé en ce que** le boîtier (20, 20') est conçu pour permettre la mise à la terre de la couche électroconductrice (26, 26').

11. Système comprenant:
- un boîtier (20, 20'), en particulier un boîtier selon l'une quelconque des revendications 1 à 10,
- une ligne d'alimentation en énergie (1a) d'un véhicule automobile, ladite ligne d'alimentation en énergie présentant un conducteur (8a) et un blindage (4a), et
- au moins un autre conducteur (8b, 30'),
où le boîtier (20, 20') loge la ligne d'alimentation en énergie (1a) du véhicule automobile dans une première zone de liaison (22a, 22a') et loge l'autre conducteur (8b, 30') dans une autre zone de liaison (22b, 22b'),
où le conducteur (8a) de la ligne d'alimentation en énergie (1a) du véhicule automobile et l'autre conducteur (8b, 30') sont reliés l'un à l'autre de manière électroconductrice dans le boîtier (20, 20'),
**caractérisé**
**en ce que** le boîtier (20, 20') est fabriqué en étant composé d'une matière plastique, et le blindage (4a) de la ligne d'alimentation en énergie (1a) du véhicule automobile est prolongé au moyen d'une couche électroconductrice (26, 26') intégrée dans le boîtier (20, 20'), laquelle couche électroconductrice est enrobée, sur ses deux côtés, d'une matière plastique moulée par injection.

12. Système selon la revendication 11,
**caractérisé en ce que** la ligne d'alimentation en énergie (1a) du véhicule automobile est une ligne haute tension, en particulier un câble haute tension.

13. Système selon la revendication 11 ou 12, **caractérisé en ce que** l'autre conducteur (8b) est fourni par une autre ligne d'alimentation en énergie (1b) du véhicule automobile, ladite ligne d'alimentation en énergie comprenant un blindage (4b).

14. Système selon l'une quelconque des revendications 11 à 13,
**caractérisé en ce que** le blindage (4a) de la ligne d'alimentation en énergie (1a) du véhicule automobile est fixé sur la ligne d'alimentation en énergie (1a) du véhicule automobile, en particulier en procédant par sertissage et/ou en utilisant un manchon de serrage.

15. Système selon l'une quelconque des revendications 11 à 14,
**caractérisé en ce que** le système (18, 18') présente en outre à chaque fois un joint d'étanchéité (28), en particulier un joint d'étanchéité à veine simple, servant à assurer l'étanchéité du boîtier (20, 20') par rapport au milieu environnant situé dans le secteur de la zone de liaison respective (22a, 22b; 22a', 22b').
